# EUROPÄISCHE PATENTANMELDUNG

(11) **EP 1 138 412 A1**
(43) Veröffentlichungstag der Anmeldung: **04.10.2001**
(21) Anmeldenummer: 01107668.4
(22) Anmeldetag: 28.03.2001
(51) Int. Cl.: B21D 28/28, B21D 26/02

(54) **Vorrichtung zum Ausschneiden eines Ausschnitts aus der Wandung eines als Hohlkörper ausgebildeten Bauteils während der Herstellung des Bauteils nach dem Innenhochdruck-Umformverfahren**

(30) Priorität: 31.03.2000 DE 10016208
(71) Anmelder: Schuler Hydroforming GmbH & Co. KG, 57234 Wilnsdorf-Wilden (DE)
(72) Erfinder: Engel, Bernd, Dr.-Ing., 57299 Burbach (DE); Prier, Matthias, Dr.-Ing., 57234 Wilnsdorf (DE)
(74) Vertreter: Valentin, Ekkehard, Dipl.-Ing.

(57) **Zusammenfassung**

Bei einer Vorrichtung zum Ausschneiden eines Ausschnitts (6) aus der Wandung eines als Hohlkörper ausgebildeten Bauteils (7) während der Herstellung des Bauteils nach dem Innenhochdruck-Umformverfahren mit mindestens einem in einem Umformwerkzeug (1) angeordneten Schneidwerkzeug (4), das einen Stempel (8) aufweist, der zum Heraustrennen des Ausschnitts (6) aus der Wandung nach außen zurückbewegbar ist, liegt der Stempel (8) mit seinem vom Bauteil wegweisenden Ende (13) auf mindestens einem elastischen Element, insbesondere einer Tellerfeder (15), auf und kommt mit seinem anderen Ende (11) an der dem Ausschnitt (6) entsprechenden Wandung des Bauteils zur Anlage. Hierbei ist das elastische Element so ausgelegt, daß es aufgrund seiner Steifigkeit mit steigendem Innendruck im Bauteil einen Gegendruck bewirkt und sich erst bei Überschreiten eines maximalen Innendrucks sprungartig elastisch verformt und somit eine Zurückbewegung des Stempels erlaubt. Es wird somit eine Vorrichtung geschaffen, die zur Zurückbewegung des Stempels ohne aufwendige Druckmittelregelungen mittels eines Druckaggregats auskommt.

## Beschreibung

Die Erfindung betrifft eine Vorrichtung zum Ausschneiden eines Ausschnitts aus der Wandung eines als Hohlkörper ausgebildeten Bauteils während der Herstellung des Bauteils nach dem Innenhochdruck-Umformverfahren mit mindestens einem in einem Umformwerkzeug angeordneten Schneidwerkzeug, das einen Stempel aufweist, der zum Heraustrennen des Ausschnitts aus der Wandung nach außen zurückbewegbar ist.

Beim als solches hinlänglich bekannten Innenhochdruck-Umformverfahren wird bekanntlich ein Bauteil, beispielsweise ein Rohrabschnitt, in ein Innenhochdruck-Umformwerkzeug mit einer Innenhochdruckquelle eingelegt, nach Verschluß der Enden des Rohrabschnitts mit Hilfe eines eingeleiteten Druckmittels aufgeweitet und dabei gegen die Innenwandung des Umformwerkzeuges gedrückt, die die endgültige Form des Hohlkörpers aufweist. In vielen Fällen ist es zur kostengünstigen Fertigung von Bauteilen erforderlich, an einem solchen Hohlkörper Ausschnitte oder Ausbrüche zu erzeugen. Damit dies im selben Arbeitsgang geschehen kann, ist es beispielsweise durch die DE 195 06 067 C1 bekanntgeworden, in dem Innenhochdruck-Umformwerkzeug ein Schneidwerkzeug vorzusehen, mit dem die Ausschnitte von innen nach außen ausgeschnitten werden.

Hierzu weist das Schneidwerkzeug einen mit Druck beaufschlagbaren Stempel auf, der soweit in die Wandung des das Bauteil bildenden Hohlkörpers hineingedrückt wird, daß ein an seinem oberen Ende befindliche, als umlaufende Prägekante ausgebildete Kante eine Sollbruchstelle in der Bauteilwandung erzeugt. Mit steigendem Innendruck in dem Bauteil und einer mittels eines Druckaggregats regulierten Druckabnahme in dem Innenraum des Stempels wird dieser zurückgeschoben und dadurch eine an dem Umformwerkzeug im Bereich des vorgesehenen Ausschnitts vorhandene umlaufende Schneidkante frei. Mit weiter ansteigendem Druck in dem Bauteil wird der Ausschnitt aus der Wandung des Bauteils mittels der an dem Umformwerkzeug vorgesehenen Schneidkante nach außen herausgetrennt. Zur Regelung der Druckbeaufschlagung steht der Innenraum des Stempels über eine Zuleitung für ein Druckmedium mit einem steuer- bzw. regelbaren Druckaggregat in Verbindung.

Die mittels eines solchen Druckaggregats realisierte Stempelbewegung ist aufwendig, weil sie eine entsprechende Steuerung und Regelung der Druckverhältnisse in Abhängigkeit des Innendrucks im Bauteil nötig macht sowie bedingt durch die Hydraulikzylinder einen sehr großen Bauraum erfordert.

Der Erfindung liegt daher die Aufgabe zugrunde, eine Vorrichtung der eingangs genannten Art mit einer weniger aufwendigen Stempelbewegung zu schaffen.

Diese Aufgabe wird erfindungsgemäß mit der Vorrichtung mit den Merkmalen nach Anspruch 1 gelöst.

Indem vorgeschlagen wird, daß der Stempel mit seinem vom Bauteil wegweisenden Ende auf mindestens einem elastischen Element aufliegt und mit seinem anderen Ende an der dem Ausschnitt entsprechenden Wandung des Bauteils zur Anlage kommt, wobei das elastische Element so ausgelegt ist, daß es aufgrund seiner Steifigkeit mit steigendem Innendruck im Bauteil einen Gegendruck bewirkt und sich bei Überschreiten eines maximalen Innendrucks sprungartig elastisch verformt und somit eine Zurückbewegung des Stempels erlaubt, wird die Bewegung des Stempels von einem hydraulischen Druckaggregat unabhängig.

Der Stempel wird so positioniert, daß er mit seinem zum Bauteil hinweisenden Ende an der dem Ausschnitt entsprechenden Wandung fest anliegt und mit seinem vom Bauteil wegweisenden Ende auf mindestens einem elastischen Element aufliegt, wobei der Stempel anfänglich mit steigendem Druck im Bauteil einen Gegendruck bewirkt, um sich bei Überschreiten eines maximalen Innendrucks sprungartig durch elastische Verformung des elastischen Elementes zurückzubewegen, so daß der Wandungsausschnitt entlang der Schneid- bzw. Trennkante im Werkzeug herausgelöst wird. Elastische Elemente lassen sich auch bei wiederholter stationärer Belastung sehr stark elastisch verformen. Es ist lediglich darauf zu achten, daß die Belastung des Innendrucks nicht die Fließgrenze zum plastischen Fließen überschreitet.

Insgesamt wird die bei der bekannten Vorrichtung über ein Druckaggregat bzw. ein Druckmedium regulierte Stempelverschiebung erfindungsgemäß über ein elastisches Element unter Ausnutzung seiner elastischen Materialeigenschaften bei zweckdienlicher Geometrie erreicht, was somit neben Kostenvorteilen vor allem Raumvorteile bringt.

Als elastisches Element wird vorteilhafterweise eine mechanische Feder gewählt, insbesondere eine Tellerfeder bzw. ein Tellerfederpaket. Grundsätzlich kommen aber alle elastischen Elemente in Frage, die ohne Verformung auf steigende Drücke reagieren, um dann bei Überschreiten eines bestimmten Druckes sich sprungartig elastisch verformen. Der Federwerkstoff ist bevorzugt metallisch, denkbar sind aber auch Gummifedern bzw. Kunststoffedern oder Flüssigkeits- und Gasfedern. Neben den Tellerfedern eignen sich im besonderen Maße elastische Knickstäbe, bevorzugt aus Metall.

Neben der unterschiedlichen Federwerkstoffwahl können sich die Federsysteme aus mehrere Federelementen, die parallel, hintereinander oder in Kombination geschaltet sein können, zusammensetzen. Auf diese Weise kann das Federsystem an den die Zurückbewegung bestimmenden Innendruck angepaßt werden.

Nach einer besonderen Ausführungsform weist das Schneidwerkzeug einen Stempel mit einem Verbindungskörper auf, die von einer entsprechenden Aufnehmung im Umformwerkzeug aufgenommen werden und vorteilhaft mit einer Abschlußplatte positioniert werden. In dem Verbindungskörper selbst ist eine Kammer vorgesehen, in der das elastische Element sowie eine Druckaufnahmeplatte angeordnet sind. Das vom Bauteil wegweisende Ende des Stempels ist über die Druckaufnahmeplatte mit dem elastischen Element verbunden. Die Druckaufnahmeplatte ist axial zur Druckeinleitung entlang der Kammerwände über den Federweg führbar. Insgesamt wird durch die Zwischenschaltung einer Druckaufnahmeplatte einem Verkanten des Stempels bei seiner Rückwärtsbewegung entgegengewirkt.

Um zu gewährleisten, daß das elastische Element zugänglich ist, wird vorgeschlagen, den Verbindungskörper zweiteilig auszubilden, wobei in seinem ersten Teil in seine zum Bauteil weisende Stirnseite eine von außen zugängliche Aussparung für die Druckaufnahmeplatte und das elastische Element eingearbeitet ist und die Aussparung des ersten Teils mittels des zweiten , deckelartigen Teils zur Bildung einer Aufnahmekammer lösbar verschlossen wird. Gleichzeitig übernimmt das zweite Teil Führungsfunktion für den Stempel.

Weitere Vorteile und Einzelheiten der Erfindung ergeben sich aus den Ansprüchen und der nachfolgenden Beschreibung eines in der Zeichnung dargestellten Ausführungsbeispiels der Erfindung. Es zeigen:
- Fig. 1: einen Ausschnitt eines als solches hinlänglich bekannten Innenhochdruck-Umformwerkzeugs mit einem im Unterteil des Werkzeugs angeordneten Schneidwerkzeug, schematisch dargestellt;
- Fig. 2: die in Figur 1 eingekreiste Einzelheit X in vergrößertem Maßstab.

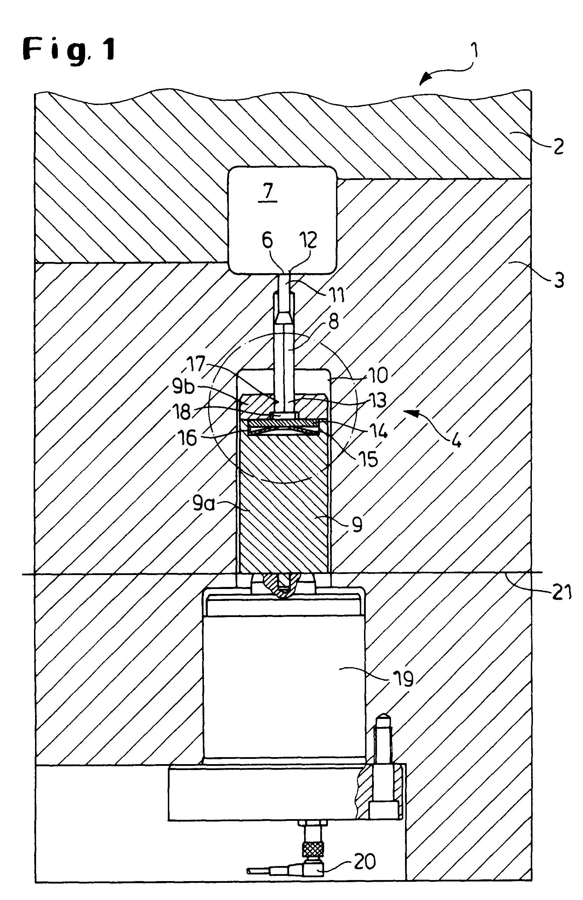

In einem in Figur 1 lediglich teilweise dargestellten Umformwerkzeug 1, das aus einem Ober- und einem Unterwerkzeug 2, 3 besteht, einer nach dem Innenhochdruck-Umformverfahren arbeitenden IHU-Presse ist als Einzelheit ein in das Unterwerkzeug 3 eingebrachtes Schneidwerkzeug 4 zum Ausschneiden eines Ausschnitts 6 aus der Wandung eines - hier rechteckigen - Bauteils 7 gezeigt.

Das Schneidwerkzeug 4 setzt sich aus einem Stempel 8 sowie einem Verbindungskörper 9 zusammen, die in einer passenden Ausnehmung 10 im Werkzeug gemäß dem Ausführungsbeispiel mittels eines Druckaggregats 19 (KolbenZylindereinheit mit entsprechender Versorgungsleitung 20 für das Druckmedium) oder alternativ einfachstenfalls mittels einer Abschlußplatte oder dergleichen positioniert und abgestützt sind. In Figur 1 ist diese Ausführungsform mit Abschlußplatte 21 schematisch angedeutet.

Das Schneidwerkzeug 4 kann ebenso im Oberwerkzeug 2 des Umformwerkzeugs angeordnet sein. Zudem können auch mehrere dieser Schneidwerkzeuge in einem Umformwerkzeug vorgesehen sein.

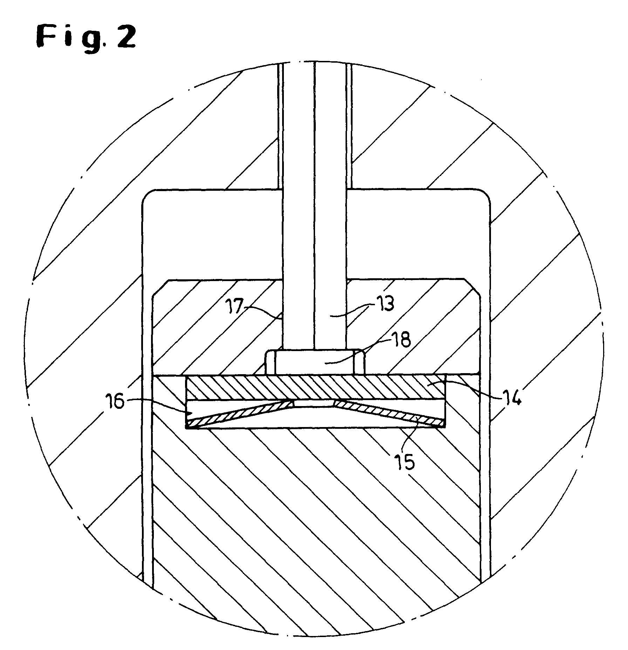

Der Stempel 8 selbst ist an dem zum Bauteil 7 weisenden Ende 11 verjüngt. Seine lichte Weite entspricht dem Trennkanten- bzw. Schneidkantenumfang 12 im Werkzeug bzw. dem Umfang des herauszutrennenden Butzens. Mit seinem vom Bauteil wegweisenden Ende 13 ist der Stempel 8 an einer Druckaufnahmeplatte 14 befestigt, die auf einer vorgespannten Tellerfeder 15 aufliegt (vgl. auch Detailansicht in Fig. 2). Sowohl die Druckaufnahmeplatte 14 als auch die Tellerfeder 15 werden von einer in die Stirnseite eines ersten Teils 9a des Verbindungskörpers eingebrachten Aussparung 16 aufgenommen. Die Aussparung wird mittels des zweiten Teils 9b des Verbindungskörpers geschlossen und weist eine Durchlaß- und Führungsöffnung 17 für den Stempel 8 auf.

Mit der Detailansicht nach Figur 2 wird besonders das Aufliegen des Stempelendes 13 über ein Zwischenstück 18 auf der Druckaufnahmeplatte 14 und der Tellerfeder 15 deutlich. Die Druckrichtung ist mit einem Pfeil eingezeichnet. Eine solche Tellerfeder, d.h. eine in Achsrichtung belastbare Kreisringscheibe, eignet sich bevorzugt wegen der Aufnahme großer Kräfte bei nicht zu großen Federwegen. Denkbar sind aber ebenso Federsysteme, deren Federkräfte variiert werden durch Schichtung von einzelnen Federtellern zu einer Federsäule bzw. Federpaketen, oder nicht dargestellte Knickstäbe oder dergleichen.

Der Umformprozeß verläuft in der Weise, daß das Schneidwerkzeug 4, umfassend den Verbindungskörper 9 und den Stempel 8, passend im Umformwerkzeug 1 positioniert wird. Das an der Wandung des Bauteils 7 anliegende Stempelende 11 entspricht in seinen Ausmessungen dem späteren Ausschnitt bzw. den im Werkzeug vorteilhaft entsprechend dem Umfang des herauszutrennenden Butzens bzw. Ausschnitts eingebrachten Schnittkanten. Während des Umformprozesses selbst ist jetzt keine weitere Regelung der Position des Schneidwerkzeugs 1 mittels eines Druckaggregats notwendig. Das elastische Element - hier eine Tellerfeder 15 - ist so ausgelegt, daß es zum steigenden Innendruck im Bauteil 7 eine Gegenkraft bildet und sich erst bei Überschreiten eines bestimmten Druckes schlagartig elastisch verformt. Die Druckaufnahmeplatte 14 sowie der Stempel 8 werden über den Federweg aufgrund des anstehenden Drucks ebenfalls vom Bauteil weg bewegt. Diese Zurückbewegung des Stempels 8 reicht aus, daß der entsprechende Wandungsausschnitt 6 im Bauteil 7 entlang der Schneidkanten bzw. dem Umfang des Ausschnitts im Werkzeug herausgetrennt wird.

Wenn anschließend nach der Ausformung des Bauteils in der Werkzeuggravur der Innendruck wieder reduziert wird, springt zwar der Stempel 8 wieder in seine Ausgangsposition zurück, weil die Belastung auf das elastische Element - hier die Tellerfeder 15 - nachläßt, beim Öffnen des Werkzeugs können aber die geschnittenen Wandungsabschnitte leicht entnommen werden. Grundsätzlich ist es auch denkbar, den Verbindungskörper 9 des Schneidwerkzeugs 4 mit einem Druckaggregat 19 - wie in Fig. 1 dargestellt - zu verbinden bzw. ein solches statt einer Abschlußplatte 21 zur Abstützung des Verbindungskörpers 9 vorzusehen. Das Druckaggregat 19 könnte die Einheit bei Druckentlastung um mindestens den Federweg zurückfahren. Auf diese Weise wird vermieden, daß bei einer Entlastung der Feder sich der herausgeschnittene Ausschnitt in der Wandung des Bauteils 7 verklemmt. Wenngleich somit zwar ein Druckaggregat vorhanden ist, so wird aufgrund des den Stempel beaufschlagenden elastischen Elementes dennoch der Vorteil erreicht, daß die Zurückbewegung des Stempels zum Ausschneiden ohne Regelung mittels eines Druckmediums auskommt.

## Patentansprüche

1. Vorrichtung zum Ausschneiden eines Ausschnitts (6) aus der Wandung eines als Hohlkörper ausgebildeten Bauteils (7) während der Herstellung des Bauteils (7) nach dem Innenhochdruck-Umformverfahren mit mindestens einem in einem Umformwerkzeug (1) angeordneten Schneidwerkzeug (4), das einen Stempel (8) aufweist, der zum Heraustrennen des Ausschnitts (6) aus der Wandung nach außen zurückbewegbar ist,
**dadurch gekennzeichnet,**
**daß** der Stempel (8) mit seinem vom Bauteil wegweisenden Ende (13) auf mindestens einem elastischen Element aufliegt und mit seinem anderen Ende (11) an der dem Ausschnitt (6) entsprechenden Wandung des Bauteils zur Anlage kommt, wobei das elastische Element so ausgelegt ist, daß es aufgrund seiner Steifigkeit mit steigendem Innendruck im Bauteil (7) einen Gegendruck bewirkt und sich erst bei Überschreiten eines maximalen Innendrucks sprungartig elastisch verformt und somit eine Zurückbewegung des Stempels (8) erlaubt.

2. Vorrichtung nach Anspruch 1,
**dadurch gekennzeichnet,**
**daß** das elastische Element eine mechanische Feder ist.

3. Vorrichtung nach Anspruch 2,
**dadurch gekennzeichnet,**
**daß** die mechanische Feder aus mindestens einer Tellerfeder (15) besteht.

4. Vorrichtung nach Anspruch 1,
**dadurch gekennzeichnet,**
**daß** das elastische Element ein Knickstab ist.

5. Vorrichtung nach einem der Ansprüche 1 bis 4,
**dadurch gekennzeichnet,**
**daß** der Stempel (8) mit seinem vom Bauteil wegweisenden Ende (13) mit einer auf dem elastischen Element aufliegenden Druckaufnahmeplatte (14) verbunden ist, die zusammen mit dem elastischen Element in einer Kammer angeordnet ist, die in einem Verbindungskörper (9) ausgebildet ist, der sich mit seiner vom Bauteil wegweisenden Stirnseite im Umformwerkzeug (1) abstützt, wobei die Druckaufnahmeplatte (14) axial zur Druckeinleitung entlang der Kammerwände über den Federweg führbar ist.

6. Vorrichtung nach Anspruch 5,
**dadurch gekennzeichnet,**
**daß** der Verbindungskörper (9) zweigeteilt ist, wobei in seinem ersten Teil (9a) in seine zum Bauteil weisende Stirnseite eine von außen zugängliche Aussparung (16) für die Druckaufnahmeplatte (14) und das elastische Element eingearbeitet ist und die Aussparung des ersten Teils kammerartig mittels des zweiten Teils (9b) lösbar verschlossen ist.
